# EUROPÄISCHE PATENTANMELDUNG

(11) **EP 1 635 080 A2**
(43) Veröffentlichungstag der Anmeldung: **15.03.2006**
(21) Anmeldenummer: 05019170.9
(22) Anmeldetag: 03.09.2005
(51) Int. Cl.: F16D 3/06, F16D 13/58

(54) **Vorrichtung zur Kopplung zweier Wellen mit axialem Versatz**

(30) Priorität: 10.09.2004 DE 102004044284
(71) Anmelder: LuK Lamellen und Kupplungsbau Beteiligungs KG, 77815 Bühl (DE)
(72) Erfinder: Schwederle, Philippe, 67000 Strasbourg (FR); Jäckel, Johann, 77830 Bühlertal (DE)

(57) **Zusammenfassung**

Es wird eine Vorrichtung zur Kopplung einer ersten (39) und einer zweiten Welle (49) vorgeschlagen. Die Wellen sind mit axialem Versatz achsparallel zueinander angeordnet. Mindestens eine der ersten Welle zugeordnete erste rotierende Masse (2) und mindestens eine der zweiten Welle zugeordnete zweite rotierende Masse (23) sind vorgesehen. Weiter weist die Vorrichtung zur Übertragung eines Drehmoments zumindest eine mit der ersten Welle gekoppelte erste Anschlagfläche (71) und eine mit der zweiten Welle gekoppelte zweite Anschlagfläche (73) auf. Die Anschlagflächen berühren sich bei der Übertragung eines Drehmoments. Die erste Anschlagfläche ist radial und ortsfest zur ersten Welle angeordnet. Die zweite Anschlagfläche ist radial und ortsfest zur zweiten Welle angeordnet.

## Beschreibung

Die Anmeldung betrifft eine Vorrichtung zur Kopplung einer ersten und einer zweiten Welle. Die Wellen sind mit axialem Versatz und achsparallel zueinander angeordnet.

Vorrichtungen der gattungsgemäßen Art sind bekannt. Bevorzugt werden solche Vorrichtungen für Motoren mit variabler Kompression und/oder mit variablem Hubraum verwendet. Die Verstellung der Kompression kann bei solchen Motoren durch eine exzentrische Lagerung der Kurbelwelle erfolgen, so dass sich ein Versatz zwischen der Kurbelwelle und einer üblicherweise mit einem Motor gekoppelten Abtriebswelle ergibt. Bekannt sind Kurbelwellenlagerungen, bei denen sich die Kurbelwellendrehachse entlang einer zylindrischen Hüllfläche verstellen lässt und die Drehachse der Abtriebswelle koaxial zur Mittelachse des Hüllzylinders verläuft. Somit ergibt sich unabhängig von der Einstellung der Kurbelwelle ein konstanter axialer Versatz der Kurbelwelle zur Abtriebswelle. Es hat sich jedoch gezeigt, dass auch bei solchen Anordnungen, insbesondere bei einer in Serienfertigung gefertigten Vielzahl solcher Anordnungen, der axiale Versatz der Wellen nicht immer 100 %ig konstant ist. Mithin müssen bei der Kopplung der zwei axial versetzten Wellen gewisse Toleranzen ausgeglichen werden können. Grundsätzlich sind Toleranzausgleiche durch im System vorhandene Elastizität ausgleichbar, die jedoch im vorliegenden Fall zum Auftreten radialer Kräfte auf die beiden zu koppelnden Wellen führen können.

Aufgabe der Erfindung ist es daher, eine Vorrichtung zur Kopplung zweier axial versetzter Wellen zu schaffen, die eine möglichst große Toleranz des axialen Versatzes ermöglicht und möglichst geringe radiale Kräfte in die Wellen einleitet.

Diese Aufgabe wird mit einer Vorrichtung gemäß den Merkmalen des Anspruchs 1 gelöst. Diese zeichnet sich durch eine erste und eine zweite Anschlagfläche aus. Die Anschlagflächen sind jeweils ortsfest zur ersten beziehungsweise zur zweiten Welle angeordnet. Zur Übertragung eines Drehmoments, beispielsweise von der ersten Welle auf die zweite Welle, können sich die Anschlagflächen berühren und so die aufgrund des Drehmoments induzierte Hebelkraft übertragen. Aufgrund der radialen ortsfesten Anordnung der Anschlagflächen verlagern sich diese im Verlauf einer Umdrehung der Wellen um den Betrag des axialen Versatzes und wieder zurück. Die Anschlagflächen führen also relativ zueinander eine oszillierende Reib- beziehungsweise Gleitbewegung aus. Über die Anschlagflächen kann ein beliebiger axialer Versatz zwischen null und einem durch die Größe der Anschlagflächen limitierten Maximalwert ausgeglichen werden. Mithin spielen Toleranzen im System bei der vorliegenden Kopplung der axial versetzten Wellen in dem angegebenen Bereich keine Rolle. Außerdem ist ersichtlich, dass radiale Kräfte auf die Wellen, die aufgrund der Kopplung entstehen, in dem bevorzugten Fall lediglich dem Betrag der verhältnismäßig kleinen zwischen den Anschlagflächen entstehenden Reibkräften entspricht. Mit der Vorrichtung können also in den oben genannten Grenzen beliebig axial versetzte Wellen quasi toleranzunabhängig miteinander gekoppelt werden, ohne dass nennenswerte radiale Kräfte in die Wellen eingeleitet werden. Selbst eine Drift des axialen Versatzes könnte mit der Vorrichtung überbrückt werden, ebenfalls ohne nennenswerte radiale Kräfte auf die Wellen.

Bevorzugt wird ein Ausführungsbeispiel, das sich durch einen Torsionsschwingungsdämpfer auszeichnet. Vorteilhafterweise kann der Torsionsschwingungsdämpfer zwischen den zwei Wellen auftretende Torsionsschwingungen reduzieren.

Ein weiteres bevorzugtes Ausführungsbeispiel zeichnet sich dadurch aus, dass der Torsionsschwingungsdämpfer als Bogenfederdämpfer ausgelegt ist. Der Bogenfederdämpfer zeichnet sich durch eine hohe Dämpfungsrate, insbesondere bei höheren Umdrehungszahlen, die oft auch mit härteren Torsionsschwingungen einhergehen, aus. Außerdem sind Bogenfederdämpfer verhältnismäßig kompakt und weisen ein relativ geringes Gewicht auf.

Außerdem wir ein Ausführungsbeispiel bevorzugt, das sich dadurch auszeichnet, dass die erste Welle eine Kurbelwelle einer Brennkraftmaschine ist, die relativ zum Motorblock der Brennkraftmaschine verstellbar ist, und dass die zweite Welle der Abtriebswelle insbesondere eine Kupplungswelle ist. Bei dieser Anordnung kann also die Abtriebswelle beziehungsweise die Kupplungswelle ortsfest relativ zum Motorblock der Brennkraftmaschine angeordnet werden. Ein durch das Verstellen der Kurbelwelle auftretender axialer Versatz kann vorteilhafterweise durch die Vorrichtung ausgeglichen werden.

Überdies wird ein Ausführungsbeispiel bevorzugt, bei dem die Vorrichtung als Zweimassenschwungrad ausgebildet ist. Vorteilhafterweise kann so die Funktion eines Zweimassenschwungrads und die des Versatzausgleichs in einer Vorrichtung vereint werden, wodurch sich ein besonders kompaktes Aggregat ergibt.

Ein weiteres bevorzugtes Ausführungsbeispiel zeichnet sich dadurch aus, dass zumindest eine Bogenfeder mit einem Bogenfederende des Bogenfederdämpfers die erste Anschlagfläche und ein mit der zweiten Welle und der zweiten Masse gekoppelter Flanschteller die zweite Anschlagfläche aufweist. Bevorzugt kann mindestens ein Flanschflügel des Flanschtellers die zweite Anschlagfläche aufweisen. Dies bietet die Möglichkeit, den axialen Versatz direkt mit dem Bogenfederdämpfer auszugleichen. Der Flanschteller ist dazu exzentrisch zur Umlaufbahn der Bogenfeder des Bogenfederdämpfers angeordnet sein.

Besonders bevorzugt wird ein Ausführungsbeispiel, das sich dadurch auszeichnet, dass das Bogenfederende der Bogenfeder die erste Anschlagfläche aufweist. Üblicherweise werden in Bogenfederdämpfern Drehmoment über Anschlagflächen übertragen und Drehmomentspitzen ausgeglichen. In der vorliegenden Anordnung können diese Anschlagflächen vorteilhaft auch zum Ausgleich eines axialen Versatzes eingesetzt werden.

Überdies wird ein Ausführungsbeispiel bevorzugt, das sich dadurch auszeichnet, dass das Bogenfederende einen Napf mit der ersten Anschlagfläche aufweist. Vorteilhafterweise ist der Napf aus einem verschleißarmen Material hergestellt. Vorteilhafterweise ist dabei das Material des Napfes, der die erste Anschlagfläche aufweist, auf das Material des Flanschflügels, der die zweite Anschlagfläche aufweist, so abgestimmt, dass sich insgesamt ein minimaler Verschleiß und/oder minimale Reibkräfte ergeben.

Ein weiteres bevorzugtes Ausführungsbeispiel zeichnet sich dadurch aus, dass ein innerer und ein äußerer Bogenfederdämpfer vorgesehen sind. Auf diese Art und Weise kann beispielsweise ein Bogenfederdämpfer speziell für den Ausgleich des axialen Versatzes optimiert werden und ein anderer Bogenfederdämpfer speziell für die Charakteristik des Zweimassenschwungrads.

Bevorzugt wird außerdem ein Ausführungsbeispiel, das sich dadurch auszeichnet, dass der innere Bogenfederdämpfer die erste Anschlagfläche und eine dritte rotierende Masse aufweist. Die dritte rotierende Masse ist über den Bogenfederdämpfer mit der zweiten rotierenden Masse gekoppelt und über den äußeren Bogenfederdämpfer mit der ersten rotierenden Masse. Mithin ist die dritte rotierende Masse im Rahmen der Federwege der Bogenfederdämpfer relativ zu der ersten und zu der zweiten rotierenden Masse verdrehbar.

Ein überdies bevorzugtes Ausführungsbeispiel sieht vor, dass die dritte rotierende Masse koaxial zur ersten rotierenden Masse und zur ersten Welle gelagert ist. Die dritte rotierende Masse kann also an der ersten rotierenden Masse gelagert werden.

Ein weiteres bevorzugtes Ausführungsbeispiel sieht vor, dass der Flanschteller koaxial und ortsfest zu dem Motorblock der Brennkraftmaschine gelagert ist. Da die zweite rotierende Masse mit dem Flanschteller gekoppelt ist, können etwaige Lagerkräfte direkt in den Motorblock eingeleitet werden.

Ein besonders bevorzugtes Ausführungsbeispiel der Erfindung sieht vor, dass die Lagerung des Flanschtellers über ein dem Motorblock zugeordnetes Zwischengehäuse und ein dem Zwischengehäuse und dem Flanschteller zugeordnetes Kugellager erfolgt. Zum Aufbringen der Lagerkräfte kann das Zwischengehäuse entsprechend stabil ausgelegt werden. Außerdem kann das Zwischengehäuse zum Einschließen von Schmierstoffen, die für die Bogenfederdämpfer hilfsreich sind, genutzt werden.

Ein überdies bevorzugtes Ausführungsbeispiel sieht vor, dass die Lagerung des Flanschtellers über einen Exzenter mit zwei exzentrischen Kugellagern, insbesondere einem dem Flanschteller zugeordneten und koaxial zur zweiten Welle angeordneten Sekundärkugellager und einem der Kurbelwelle, insbesondere über die erste rotierende Masse, zugeordneten und koaxial zur Kurbelwelle angeordneten Primärlager erfolgt. Vorteilhafterweise kann bei dieser Anordnung das Zwischengehäuse eingespart werden, da die Lagerkräfte über den Exzenter auf die Kurbelwelle übertragen werden können. Mithin ergibt sich ein vorteilhaft geringes Gewicht der Vorrichtung.

Ein weiteres bevorzugtes Ausführungsbeispiel der Erfindung sieht vor, dass die Lagerung des Flanschtellers über einen Reibring zur Aufnahme axialer Kräfte, insbesondere einem der dritten Masse zugeordneten Reibring, sowie zur Aufnahme von radialen Kräften über ein dem Flanschteller und der zweiten Welle zugeordneten ersten Nadellager erfolgt. Außerdem ist die zweite Welle zur Aufnahme von radialen Kräften zusätzlich einem Exzenter mit einem zur Kurbelwelle koaxialen und der Kurbelwelle zugeordneten Kugellager zugeordnet. Bevorzugt erfolgt die Zuordnung zur Kurbelwelle über die erste Masse. Ein Reibring ist vorteilhafterweise im Vergleich zu Kugellagern einfach aufgebaut und kann bei der vorliegenden Konfiguration zur Dämpfung wünschenswerte Reibkräfte aufbringen.

Ein weiteres bevorzugtes Ausführungsbeispiel sieht vor, dass die Lagerung des Flanschtellers über einen Exzenter mit zwei exzentrischen Kugellagern, nämlich einem Sekundärkugellager und einem Primärkugellager erfolgt. Der Exzenter ist dabei ein ortsfestes Teil, das sich lediglich bei einer Verstellung der Kurbelwelle mit ausrichtet. Die Kugellager sind jeweils zu einer der Wellen koaxial und lagern die Rotationsbewegung der entsprechend zugehörigen rotierenden Massen Der Exzenter (101) weist außerdem ein der zweiten Welle zugeordnetes Nadellager, insbesondere ein zweireihiges Nadellager (113), auf. Vorteilhaft können so Kräfte von der zweiten Welle auf den Exzenter übertragen werden.

Ein außerdem bevorzugtes Ausführungsbeispiel zeichnet sich dadurch aus, dass die Lagerung des Flanschtellers über eine der Kurbelwelle und einer Anlauffläche des Flanschtellers zugeordnete Kugelrolle oder Anlaufscheibe zur Aufnahme axialer Kräfte sowie über ein dem Flanschteller und der zweiten Welle zugeordneten Kugellager zur Aufnahme radialer Kräfte erfolgt. Kugelrollen und Anlaufscheiben sind günstige und einfach erhältliche Standardbauteile. Mithin ergibt sich eine besonders günstige Vorrichtung. Ein überdies bevorzugtes Ausführungsbeispiel sieht vor, dass die Kugelrolle vor der Montage des Zweimassenschwungrads in die Kurbelwelle einpressbar ist. Der Motor kann also vor der Montage des Zweimassenschwungrads entsprechend vorbereitet werden, was eine spätere Montage des Zweimassenschwungrads erleichtert. Außerdem ist die Kurbelwelle ohne montiertes Zweimassenschwungrad leicht zugänglich.

Schließlich zeichnet sich ein Ausführungsbeispiel dadurch aus, dass das Zweimassenschwungrad nach dem Einpressen der Kugelrolle als komplett vormontierte Einheit montierbar ist. Komplett vormontierte Einheiten ermöglichen einen besonders effizienten und kostengünstigen Endmontageprozess.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 einen Querschnitt einer Vorrichtung zur Kopplung zweier Wellen mit einem Bogenfederdämpfer mit drei Bogenfedern und mit einem Zwischengehäuse;
Figur 2 einen Längsschnitt der in Figur 1 gezeigten Vorrichtung mit einer angeflanschten Trockenkupplung;
Figur 3 einen weiteren Querschnitt einer Vorrichtung zur Kopplung zweier Wellen mit einem inneren und einem äußeren Bogenfederdämpfer und mit einem Zwischengehäuse;
Figur 4 einen Längsschnitt der in Figur 3 gezeigten Vorrichtung;
Figur 5 einen weiteren Querschnitt einer Vorrichtung zur Kopplung zweier Wellen mit einem Exzenter mit zwei Kugellagern und einem Nadellager, jedoch ohne Zwischengehäuse;
Figur 6 einen Längsschnitt der in Figur 5 gezeigten Vorrichtung;
Figur 7 eine Teilansicht der in Figur 6 gezeigten Ansicht, jedoch mit einem zweireihigen Nadellager anstelle des in Figur 6 gezeigten einreihigen Nadellagers;
Figur 8 eine weitere Detailansicht der Darstellung gemäß Figur 6, jedoch mit einem Reibring;
Figur 9 eine schematisierte teilweise Draufsicht auf die Vorrichtung gemäß den Figuren 6 bis 8 auf Montagedurchbrüche und dahinter liegende durch die Montagedurchbrüche zugängliche Schraubverbindungen eines Kurbelwellenflansches;
Figur 10 einen weiteren Querschnitt einer Vorrichtung zur Verbindung zweier Wellen mit einer Kugelrolle zur Aufnahme axialer Lagerkräfte;
Figur 11 einen Längsschnitt der in Figur 10 gezeigten Vorrichtung und
Figur 12 eine Detailansicht der in Figur 11 gezeigten Darstellung, jedoch mit einer Anlaufscheibe anstelle der Kugelrolle.

In der folgenden Figurenbeschreibung sind gleiche beziehungsweise funktionell ähnliche Teile mit gleichen Bezugszeichen versehen.

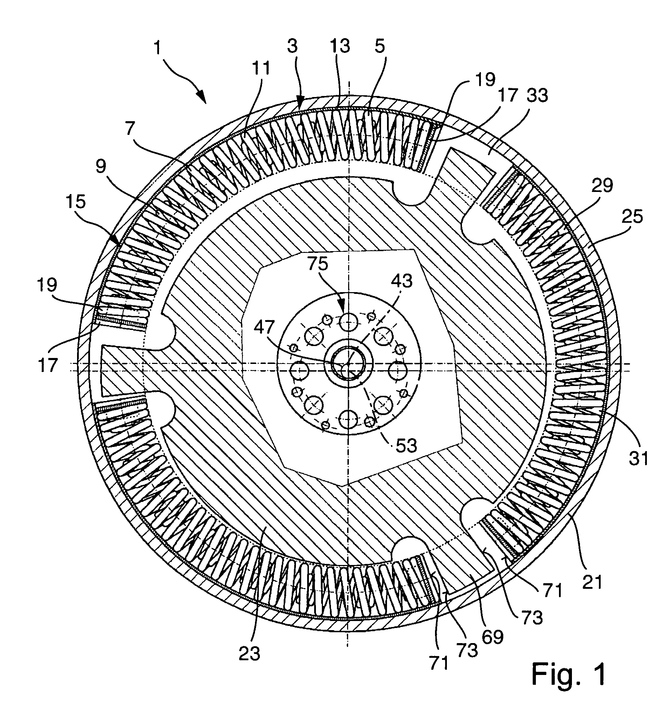

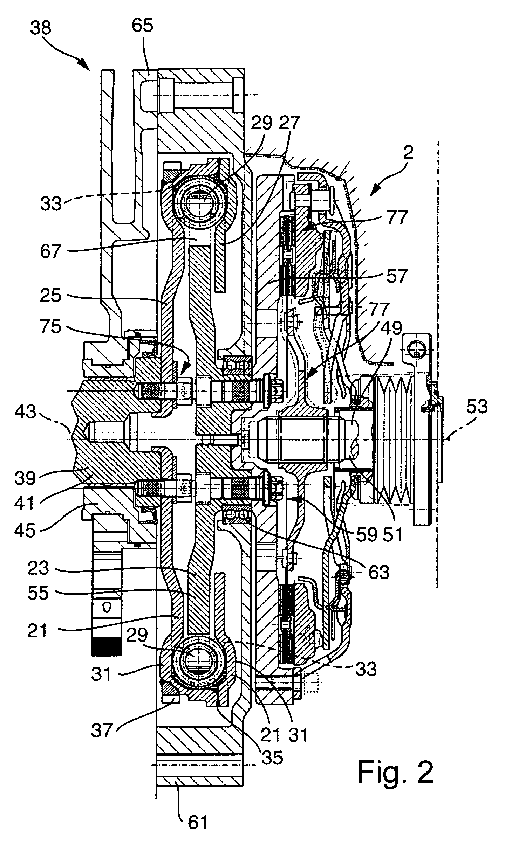

Figur 1 zeigt einen Querschnitt einer Vorrichtung 1 zur Kopplung zweier Wellen mit einem Torsionsschwingungsdämpfer 3, der einen Bogenfederdämpfer 5 aufweist. Figur 2 zeigt einen Längsschnitt der in Figur 1 gezeigten Vorrichtung 1 mit einer angeflanschten Trockenkupplung 2. Trockenkupplungen sind bekannt und dienen zum Koppeln beziehungsweise Entkoppeln zweier Wellen und werden daher in dieser Anmeldung nur soweit zum Verständnis der Erfindung notwendig beschrieben. Im Folgenden wird auf die Figuren 1 und 2 gleichermaßen Bezug genommen.

Der Bogenfederdämpfer 5 weist drei auf einem Radius angeordnete Bogenfedereinheiten 7 auf. Jede der Bogenfedereinheiten 7 weist eine innere Bogenfeder 9 und eine äußere Bogenfeder 11 auf. Gegebenfalls kann auch jeweils nur eine Bogenfeder vorgesehen sein. Zur Aufnahme der an den äußeren Bogenfedern 11 auftretenden Fliehkräfte weist jede der Bogenfedereinheiten 7 des Bogenfederdämpfers 5 des Torsionsschwingungsdämpfers 3 eine Lagerschale 13 auf, die ein Reiblager 15 für die äußeren Bogenfedern 11 bildet. Zur Dämpfung von Schwingungen kann im System vorhandene kinetische Energie an den Reiblagern 15 abgebaut werden. Die prinzipielle Funktionsweise von Bogenfederdämpfern ist bekannt, so dass auch diese nur soweit zum Verständnis der Erfindung notwendig in dieser Anmeldung beschrieben werden.

Jede Bogenfedereinheit 7 des Bogenfederdämpfers 5 weist zwei Näpfe 17 auf. Die Näpfe 17 sind in Bogenfederenden 19 der äußeren Bogenfedern 11 eingepresst.

Die Vorrichtung 1 weist eine erste rotierende Masse 21 und eine zweite rotierende Masse 23 auf. Die erste rotierende Masse 21 ist aus einem ersten tellerförmigen Teil 25 und einem ringförmigen Teil 27 zusammengesetzt. Im Schnitt, wie in Figur 2 dargestellt, ergibt sich eine asymmetrische U-förmige Gestalt der ersten rotierenden Masse 21, wobei die zweite rotierende Masse 23 in das U eingreift. Radial nach außen hin bildet die erste rotierende Masse 21 Federkanäle 29 für die Bogenfedereinheiten 7 des Bogenfederdämpfers 5. Der Federkanal 29 der ersten rotierenden Masse 21 wird durch Auswölbungen 31 der Teile 25 und 27 gebildet. Insgesamt drei Eindellungen 33, die in Figur 2 gepunktet dargestellt sind, bilden die Enden der Federkanäle 29, also Anschläge für die Bogenfedern 9 und 11. Die Bogenfedern 9 und 11 können unter Vorspannung zwischen die Eindellungen 33 in die Federkanäle 29 der Teile 25 und 27 der ersten rotierenden Masse 21 eingebracht werden. Dies geschieht vor dem Zusammenfügen der Teile 25 und 27. Die Teile 25 und 27 der ersten rotierenden Masse 21 können auf beliebige Art und Weise miteinander verbunden werden. Im vorliegenden Fall, wie in Figur 2 ersichtlich, ist dies durch eine Verschweißung 35 erfolgt. Anstelle der Verschweißung kann auch beispielsweise eine Verklebung, Verschraubung oder ähnliches vorgesehen werden. Ferner ist der ersten rotierenden Masse 21 der Vorrichtung 1 ein Zahnkranz 37 zugeordnet, der mit einem Ritzel eines hier nicht dargestellten Starters kämmen kann. Der nicht dargestellte Starter kann zum Anlassen einer mit der ersten rotierenden Masse 21 verbundenen - in Figur 2 nur teilweise dargestellten Brennkraftmaschine 38 dienen.

Die erste rotierende Masse 21 ist einer ersten Welle 39 zugeordnet. Die erste Welle 39 ist vorliegend als Kurbelwelle 41 mit einer Drehachse 43 ausgeführt. Die Kurbelwelle 41 ist Bestandteil der nur teilweise dargestellten Brennkraftmaschine 38.

Die Brennkraftmaschine 38 weist ein exzentrisches Lagerstück 45 auf, das die Kurbelwelle um ihre Drehachse 43 drehbar und zusätzlich entlang einem Radius 47 verschwenkbar lagert. Der Radius 47 ist in Figur 1 angedeutet. Die Drehachse 43 der Kurbelwelle 41 der Brennkraftmaschine 38 kann also entlang einer zylindrischen Hülllfläche verschwenkt werden. Hierzu dient das Lagerstück 45 und weitere entsprechende, hier nicht dargestellte Hebel, Zahnräder, Antriebe, oder ähnliches. Die zweite rotierende Masse 23 ist einer zweiten Welle 49, die vorliegend als Abtriebswelle 51 der Trockenkupplung 2 mit einer Drehachse 53 ausgeführt ist. Die zweite rotierende Masse 23 weist einen Flanschteller 55 und ein kupplungsseitiges Drehteil 57 auf. Das Drehteil 57 und der Flanschteller 55 sind durch einen Kupplungsflansch 59 fest miteinander verbunden. Die erste rotierende Masse 21 beziehungsweise der Flanschteller 55 der Vorrichtung 1 ist drehbar um die zweite Drehachse 53 an einem Zwischengehäuse 61 - das vereinfachend in Fig. 1 nicht dargestellt ist - mittels eines Kugellagers 63 gelagert. Das Zwischengehäuse 61 ist fest mit einem hier nur teilweise dargestellten Motorblock 65, der hier nur teilweise dargestellten Brennkraftmaschine 38 verbunden. Die zweite rotierende Masse 23 ist also ortsfest zu der Brennkraftmaschine 38 drehbar um die zweite Drehachse 53 gelagert. Relativ dazu kann die erste Drehachse 43 der Kurbelwelle 41, insbesondere mit Hilfe des exzentrischen Lagerstücks 45 entlang des Radius 47 verschwenkt werden. Anstelle einer Verschwenkbewegung entlang des Radius 47 sind auch andere beliebige Verstellwege der Kurbelwelle 41 der Brennkraftmaschine 38 denkbar.

Die zweite rotierende Masse 23 beziehungsweise der Flanschteller 55 steht im Eingriff mit einem U-förmigen Innenraum 67 der ersten rotierenden Masse 21. Der Flanschteller 55 weist Flanschflügel 69 auf, die soweit in dem U-förmigen Innenraum 67 der ersten rotierenden Masse 21 hineinragen, dass diese sich im Drehbereich der in Figur 2 gepunktet dargestellten Eindellungen 33 - im drehmomentfreien Zustand zwischen den Eindellungen 33 - der Teile 25 und 27 der ersten rotierenden Masse 21 befinden. Mithin ragen die Flanschflügel 69 in die Radien der Federkanäle 29 des Bogenfederdämpfers 5 hinein und können an den Näpfen 17 der äußeren Bogenfedern 11 zur Übertragung eines Drehmoments von der ersten Welle 39 auf die zweite Welle 49 und umgekehrt anschlagen. Der Flanschteller 55 weist insgesamt drei Flanschflügel 69 auf, die wiederum jeweils zwei senkrecht zur Bildebene der Figur 1 liegende zweite Anschlagflächen 73 aufweisen. Als Gegenstück dazu weisen die Näpfe 17 der äußeren Bogenfedern 11 der Bogenfedereinheiten 7 jeweils eine erste Anschlagfläche 71 auf, die ebenfalls senkrecht zur Bildebene der Figur 1 liegen.

Zur Übertragung eines Drehmoments zwischen den Wellen 39 und 49 berührt sich zumindest ein Paar der Anschlagflächen 71 und 73, vorzugsweise pro Bogenfedereinheit 7 des Bogenfederdämpfers 5 je ein Paar der Anschlagflächen 71 und 73. Dadurch, dass die Bogenfedereinheiten 7 des Bogenfederdämpfers 5 auf der ersten Drehachse 43 und die erste rotierende Masse 21, also der Flanschteller 55 auf der Drehachse 53 der zweiten Welle umlaufen, sind die ersten Anschlagflächen 71 radial ortsfest zur Drehachse 43 der ersten Welle 39 und die zweiten Anschlagflächen 73 radial ortsfest zur zweiten Drehachse 53 der zweiten Welle 49 angeordnet. Mithin variiert im vorliegenden Ausführungsbeispiel die Kontaktfläche eines Paares von Anschlagflächen 71 und 73 zwischen einem minimalen und einem maximalen Wert. Es ergibt sich also eine Dauerbewegung zwischen den Anschlagsflächen 71 und 73 der Flanschflügel 69 und Näpfe 17. Die Näpfe der äußeren Bogenfedern 11 können dabei als Verschleißschutz dienen und entsprechend auf das Material der Flanschflügel 69 des Flanschtellers 55 angepasst sein. Vorteilhafterweise ergibt sich bei der vorliegenden Konfiguration des Bogenfederdämpfers 5 mit drei Bogenfedereinheiten 7 aufgrund des axialen Versatzes und mithin aufgrund der unterschiedlichen Längen der Bogenfedern 9 und 11 beim Betrieb der Vorrichtung 1 keine Unwucht, sondern lediglich eine ortsfeste Kraft, deren Kraftrichtung von der Kurbelwellenstellung abhängig ist. Dieser Vorteil könnte beispielsweise auch mit fünf Federeinheiten erzielt werden. Darüber hinaus ist es denkbar, eine beliebige Anzahl von Bogenfedereinheiten 7 des Bogenfederdämpfers 5 vorzusehen.

Bevorzugt unterscheiden sich die Oberflächennormalenvektoren der Anschlagflächen 71 und 73 lediglich in ihrem Vorzeichen und stehen jeweils senkrecht zum Drehrichtungsvektor der Wellen. Außerdem liegen die Anschlagflächen 71 und 73 bevorzugt in einer Radialebene der zugehörigen Drehachse.

Andere von diesen Bedingungen abweichende räumliche Anordnungen führen zu gegebenenfalls erwünschten radialen und/oder axialen Kräften mit wechselndem Vorzeichen bei wechselnder Drehmomentrichtung zwischen den Wellen 39 und 49.

Ferner ist es denkbar die Anschlagflächen 71 und 73, z.B. zur Verbesserung der Schmierung oder zur Optimierung des Anlagekontakts, zumindest teilweise leicht gekrümmt auszugestalten. Insbesondere eine Auslegung der Anschlagflächen 71 und 73 analog der Verzahnung von Zahnrädern kann angebracht sein. Vorteilhaft werden jedoch kleine, durch den Versatz bedingte Winkeldifferenzen zwischen den Anschlagflächen 71 und 73 durch die entsprechende Bogenfeder 11 ausgeglichen.

Bevorzugt ist es auch denkbar, die Näpfe 17 mit einer Erhebung auszustatten, so dass sich trotz der Dauerbewegung der Anschlagflächen 71 und 73 eine konstante Kontaktfläche ergibt. Gegebenenfalls können dazu die Flanschflügel auch über die Näpfe 17 überstehen.

Für den Fall, dass die Kontaktfläche zwischen einem Minimal- und einem Maximalwert variiert, könnten typischerweise Werte zwischen 189 mm2 und 277 mm2 vorgesehen werden. Grundsätzlich gilt, eine größere Kontaktfläche der Anschlagflächen 71 und 73 bedingt einen verhältnismäßig geringeren Verschleiß.

Die erste rotierende Masse 21 beziehungsweise das erste tellerförmige Teil 25 der ersten rotierenden Masse 21 ist drehfest mittels eines Kurbelwellenflansches 75 mit der Kurbelwelle 41 verbunden, dreht also koaxial mit der Kurbelwelle auf der Drehachse 43.

Insgesamt ergibt sich ein Drehmomentfluss zwischen den Wellen 39 und 49 ausgehend von der Kurbelwelle 41 der Brennkraftmaschine 38 über den Kurbelwellenflansch 75 auf die erste rotierende Masse 21 über die Anschläge bildenden Eindellungen 33 der Teile 25 und 27 der ersten rotierenden Masse 21 auf die Näpfe 17 der äußeren Bogenfeder 11 über die Bogenfedern 9 und 11 auf den jeweils gegenüber liegenden Napf 17 der jeweiligen Bogenfedereinheit 7 über die erste Anschlagfläche 71 des gegenüber liegenden Napfes 17 auf die zweite Anschlagfläche 73 des entsprechenden Flanschflügels 69 des Flanschtellers 55 über den Kupplungsflansch 59 auf das Kupplungsdrehteil 57 über Kupplungselemente 77 der Trockenkupplung 2 schließlich auf die zweite Welle 49 beziehungsweise die Abtriebswelle 51. Torsionsschwingungen in den genannten den Drehmomentfluss realisierenden Elementen können vorteilhaft durch den Bogenfederdämpfer 5 des Torsionsschwingungsdämpfers 3 der Vorrichtung 1 reduziert werden. Gleichzeitig wird über die Anschlagflächen 71 und 73 ein Versatzausgleich zwischen den Drehachsen 43 und 53 realisiert. Für den Fall eines umgekehrten Drehmomentflusses schlagen die gegenüberliegenden Anschlagflächen 73 der Flanschflügel 69 des Flanschtellers 55 an den entsprechenden Näpfen 17 beziehungsweise Bogenfederenden 19 an.

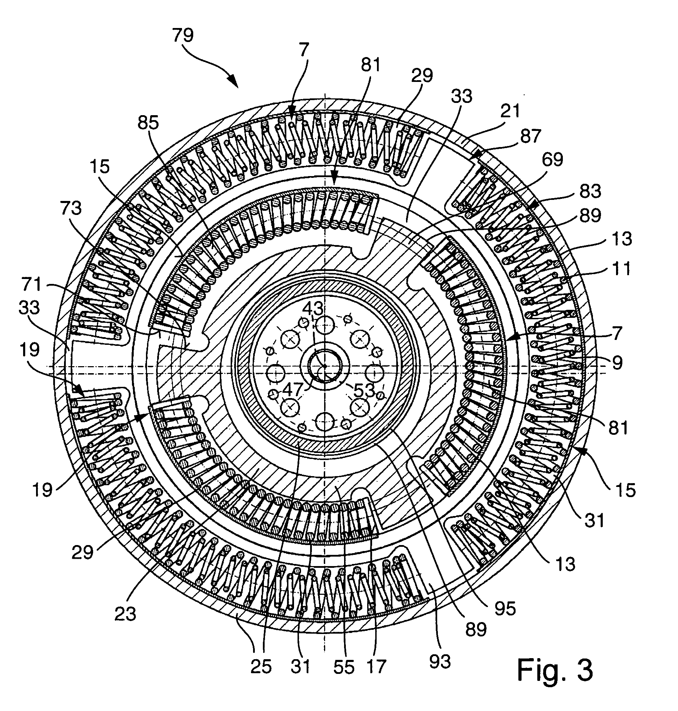

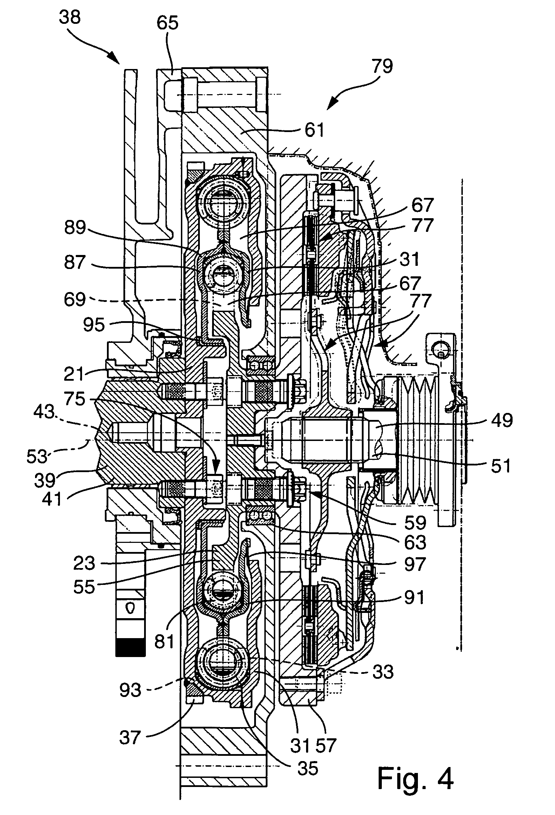

Figur 3 zeigt einen Querschnitt einer weiteren Vorrichtung 79 zur Kopplung der zwei Wellen 39 und 49. Figur 4 zeigt einen entsprechenden Längsschnitt der Vorrichtung 79 mit der Trockenkupplung 2. Im Folgenden werden unter Bezug auf die Figuren 3 und 4 die Unterschiede zur Vorrichtung 1 gemäß der Darstellung der Figuren 1 und 2 erläutert.

Im Unterschied weist der Torsionsschwingungsdämpfer 3 der Vorrichtung 79 einen inneren Bogenfederdämpfer 81 und einen äußeren Bogenfederdämpfer 83 auf. Der äußere Bogenfederdämpfer 83 weist in diesem Ausführungsbeispiel keine Näpfe 17 auf. Der äußere Bogenfederdämpfer erfüllt die von einem Zweimassenschwungrad bekannte Funktion. Der äußere Bogenfederdämpfer 83 kann zwei, drei oder eine beliebige andere Anzahl an Bogenfedereinheiten 7 aufweisen.

Der innere Bogenfederdämpfer 81 erfüllt die Funktion des Versatzausgleiches und weist daher innere Bogenfedern 85 auf. Die innere Bogenfedern 85 sind daher entsprechend mit Näpfen 17, die jeweils die erste Anschlagfläche 71 aufweisen, ausgestattet. Der Flanschteller 55 der ersten rotierenden Masse 21 beziehungsweise dessen Flanschflügel 69 mit den zweiten Anschlagflächen 73 ist analog der Darstellung in Figur 1 ausgebildet. Lediglich der Durchmesser des Flanschtellers 55 der Vorrichtung 79 ist im Durchmesser kleiner gewählt und an den Radius des inneren Bogenfederdämpfers 81 angepasst. Der innere Bogenfederdämpfer 81 der Vorrichtung 79 erfüllt zusammen mit dem Flanschteller 55 der Vorrichtung 79 die bereits beschriebene Funktion des Versatzausgleichs. Die inneren Bogenfedern 85 des inneren Bogenfederdämpfers 81 können für diesen Zweck vergleichsweise steif ausgelegt sein, da die eigentliche Dämpfungsfunktion durch den äußeren Bogenfederdämpfer 83 der Vorrichtung 79 übernommen wird. Für den Fall, dass die Kontaktfläche zwischen einem Minimal- und einem Maximalwert variiert, könnten typischerweise Werte zwischen 108 mm2 und 196 mm2 vorgesehen werden.

Die Federkanäle 29 sowie die Federanschläge für die Bogenfederenden 19 der inneren Bogenfedern 85 werden durch eine dritte rotierende Masse 87 gebildet. Die dritte rotierende Masse 87 ist analog der ersten rotierenden Masse 21 aufgebaut und weist entsprechend ein erstes tellerförmiges Drehteil 89 und ein zweites ringförmiges Drehteil 91, die miteinander verbunden sind, auf. Zusätzlich weist die dritte rotierende Masse 87 der Vorrichtung 79 Flanschflügel 93 auf, an die Bogenfederenden 19 der Bogenfedereinheiten 7 des äußeren Bogenfederdämpfers 83 der Vorrichtung 79 anschlagen können. Über die Flanschflügel 93 wird auf bekannte Art und Weise eine Drehmomentkopplung ohne Versatz zwischen der ersten rotierenden Masse 21 und der dritten rotierenden Masse 87 der Vorrichtung 79 hergestellt. Die dritte rotierende Masse 87 ist mittels einer Reiblagerhülse 95 und einer Tellerfeder 97 relativ verdrehbar und koaxial zur ersten rotierenden Masse 21 gelagert. Die dritte rotierende Masse 87 beinhaltet den inneren Bogenfederdämpfer 81 und befindet sich innerhalb des U-förmigen Innenraums 67, der durch die zwei Drehteile 23 und 25 der ersten rotierenden Masse 21 gebildet wird. Die Tellerfeder 97 stützt sich an der dritten rotierenden Masse und dem zweiten ringförmigen Drehteil 27 der ersten rotierenden Masse 21 ab und drückt somit die dritte rotierende Masse 87 gegen die Reiblagerhülse 95 und diese gegen das erste tellerförmige Drehteil 25 der ersten rotierenden Masse 21. Insgesamt ergibt sich eine Hintereinanderschaltung des äußeren Bogenfederdämpfers 83 und des inneren Bogenfederdämpfers 81 der Vorrichtung 79. Grundsätzlich ist die Hintereinanderschaltung einer beliebigen Anzahl von Bogenfederdämpfern denkbar, wobei zumindest einer der Bogenfederdämpfer einen axialen Versatz ausgleicht. Der Drehmomentfluss verläuft also im Vergleich zur in den Figuren 1 und 2 beschriebenen Vorrichtung 1 zusätzlich über die Bogenfedereinheiten 7 des äußeren Bogenfederdämpfers 83 der Vorrichtung 79 auf die Flanschflügel 93 der dritten rotierenden Masse 87 der Vorrichtung 79. Der weitere Drehmomentfluss sowie die weiteren Kopplungen beziehungsweise Anflanschungen entsprechen mit der vorgenannten Ausnahme denen der in den Figuren 1 und 2 beschriebenen Vorrichtung 1.

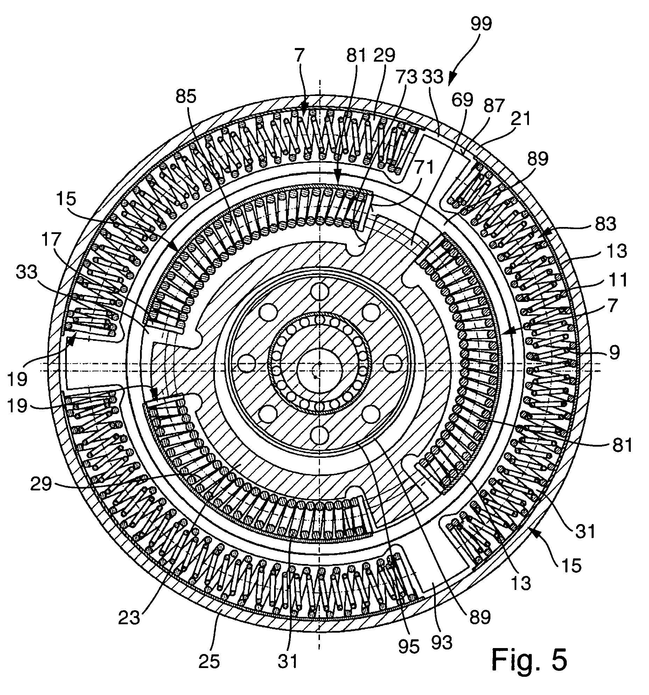

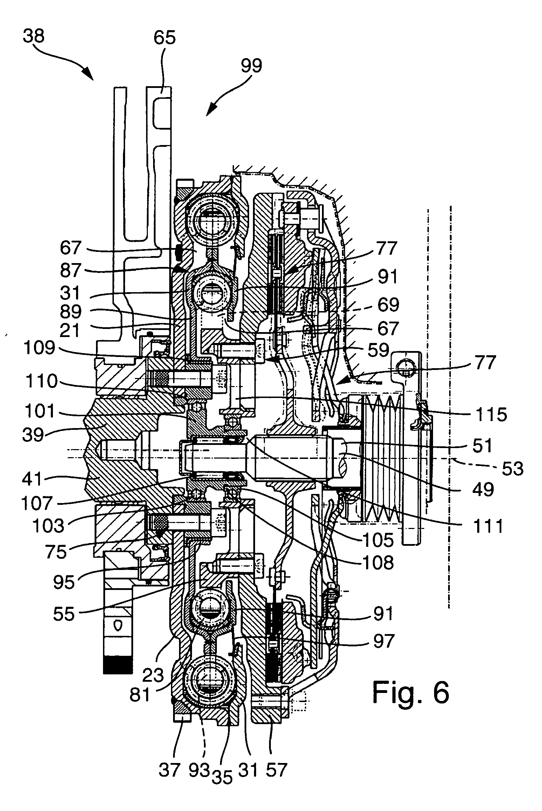

Figur 5 zeigt eine weitere Vorrichtung 99 zur Kopplung der Wellen 39 und 49 als Querschnitt. Figur 6 zeigt den entsprechenden Längsschnitt der Vorrichtung 99 mit angeflanschter Trockenkupplung 2. Im Folgenden wird unter Bezug auf die Figuren 5 und 6 auf die Unterschiede der Vorrichtung 99 zu den vorhergehend beschriebenen Vorrichtungen 79 - gemäß den Figuren 3 und 4- und der Vorrichtung 1 -gemäß den Figuren 1 und 2- eingegangen.

Im Unterschied zu den Vorrichtungen 1 und 79 weist die Vorrichtung 99 kein Zwischengehäuse 61 auf. Zum Übertragen entsprechender Lagerkräfte zwischen der Abtriebswelle 51, die in diesem Ausführungsbeispiel als Referenzwelle mit eigener Lagerung dient, und der Brennkraftmaschine 38 wird ein innerhalb des Kupplungsflansches 59 und des Kurbelwellenflansches 75 angeordneter Exzenter 101 verwendet. Der Exzenter 101 weist insgesamt drei Lagerstellen, nämlich ein Primärkugellager 103, ein Sekundärkugellager 105 sowie ein der Kupplungsabtriebswelle 51 zugeordnetes Nadellager 107 auf. Die Lager 103 bis 107 können integraler Bestandteil des Exzenters 101 oder lediglich diesem zugeordnet sein. Diese Zuordnung kann beispielsweise durch Presspassung oder einfaches Anliegen an entsprechenden Anschlägen erfolgen. Im vorliegenden Fall überträgt der Exzenter 101 die Ausrückkraft der Trockenkupplung 2. Der Kraftfluss erfolgt von der die zweiten rotierenden Masse 23 auf das Sekundärkugellager 5, von dort insbesondere über einen Anschlag 108 des Exzenters 101 auf den Exzenter 101, über das Sekundärkugellager 5, insbesondere über einen Anschlag 110 eines Flanschzwischenstücks 109, auf das Flanschzwischenstück 109 der ersten rotierenden Masse 21 und schließlich über den Kurbelwellenflansch 75 auf die Kurbelwelle 41.

Im vorliegenden Ausführungsbeispiel weist der Kurbelwellenflansch 75 das ringförmige Flanschzwischenstück 109 auf. Dieses ist gemeinsam mittels der ersten rotierenden Masse 21 an die Kurbelwelle 41 der Brennkraftmaschine 38 angeflanscht. Mithin wird die Ausrückkraft der Trockenkupplung 2 direkt auf die Kurbelwelle 41 der Brennkraftmaschine 38 über den Exzenter 101 und die entsprechenden Lager 103 und 105 übertragen. Als weitere Funktion des Exzenters 101 ist dieser mittels des Nadellagers 107, das sich in einer exzentrischen Bohrung 111 des Exzenters 101 befindet, auf die Drehachse 53 der Kupplungsabtriebswelle 51 referenziert. Dadurch hat der Exzenter 101 der Vorrichtung 99 keinen rotatorischen Freiheitsgrad und ist somit ortsfest. Außerdem ist die Abtriebswelle 51 unabhängig von der Verschwenkposition der Kurbelwelle 41 ortsfest zur Brennkraftmaschine 38 gelagert. Das Primärkugellager 103 des Exzenters 101 der Vorrichtung 99 ist zentrisch zu der Drehachse 43 der Kurbelwelle 41 angeordnet. Das Sekundärkugellager 105 des Exzenters 101 der Vorrichtung 99 ist zentrisch zu der Drehachse 53 der Kupplungsabtriebswelle 51 angeordnet. Es ist zu erkennen, dass der Exzenter 101 das kinematische Gegenstück zu dem exzentrischen Lagerstück 45 für die Kurbelwelle 41 bildet. Mithin erzwingt eine relative Verdrehung des Lagerstücks 45 die gegenüber der Brennkraftmaschine 38 eine entsprechende Verlagerung des Exzenters 101 der Vorrichtung 99. Ohne eine solche Verlagerung des Lagerstücks 45 ist der Exzenter 101, wie bereits beschrieben, ortsfest. Die Lager 103 bis 107 des Exzenters 101 drehen im Mittel mit Motordrehzahl.

Im Unterschied zu den bereits beschriebenen Vorrichtungen 1 und 79 erfolgt also die Lagerung der zweiten rotierenden Masse 23 und eine entsprechende Abstützung an der ersten rotierenden Masse 21 innerhalb der Schraubenkreise der Flansche 59 und 75 der Vorrichtung 99. Eine Abstützung außerhalb des Kupplungsflansches 59 mittels des Kugellagers 63 und des Zwischengehäuses 61 ist nicht notwendig und kann daher bei der Vorrichtung 99 gemäß der Darstellung der Figuren 5 und 6 entfallen.

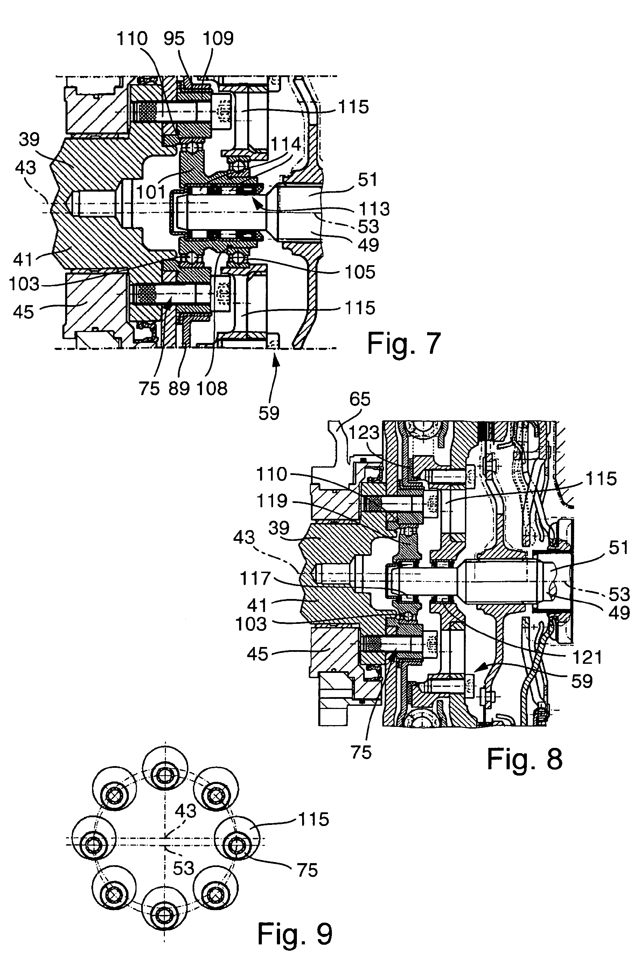

Figur 7 zeigt eine Detaildarstellung des in Figur 6 gezeigten Querschnitts des Exzenters 101 mit der Abwandlung, dass anstelle des Lagers 107 zur Lagerung des Exzenters 101 an der Kupplungsabtriebswelle 51 ein zweiteiliges Nadellager 113 eingesetzt wird. Die vergleichsweise langen Nadeln des Nadellagers 107 sind bei dem zweiteiligen Nadellager durch zwei Reihen 114 vergleichsweise kurzer Nadeln ersetzt. Mithin können bei vergleichsweise kurzer Gesamtlänge der Nadeln vergleichsweise große gelagerte Distanzen realisiert werden.

Figur 8 zeigt eine weitere Detaildarstellung und Abwandlung des in Figur 6 gezeigten Schnitts der Vorrichtung 99. Bei diesem Ausführungsbeispiel wird die Abtriebswelle 51 an einem Nadellager 117 eines Exzenters 119 radial abgestützt. Dazu weist der Exzenter 119 das Primärkugellager 103 auf, das sich an dem Flanschzwischenstück 109 der ersten rotierenden Masse 21 abstützt. Außerdem ist ein weiteres Nadellager 121 vorgesehen, das die Antriebswelle 51 gegenüber der zweiten rotierenden Masse 23 beziehungsweise gegenüber dem Flanschteller 55 der zweiten rotierenden Masse 23 radial abstützt. Das weitere Nadellager 121 hat dabei eine ähnliche Funktion wie die Lagerung eines Zweimassenschwungrades.

Bei dem Ausführungsbeispiel der Vorrichtung 99 gemäß Figur 8 muss die Ausrückkraft der Trockenkupplung anderweitig abgestützt werden, da die Nadellager 117 und 121 nur radiale Kräfte übertragen. Daher ist bei der Vorrichtung 99 gemäß der Darstellung in Figur 8 ein Reibring 123 vorgesehen. Der Reibring 123 liegt einerseits flach an der dritten rotierenden Masse 87 der Vorrichtung 99 und andererseits am Flanschteller 55 der zweiten rotierenden Masse 23 an.

Mithin können axiale Kräfte, beispielsweise verursacht durch die Ausrückkraft der Trockenkupplung 2 über den Kupplungsflansch 59 auf den Flanschteller 55 über den Reibring 123 auf die dritte rotierende Masse 87 übertragen werden. Die dritte rotierende Masse 87 ist wiederum in axialer Richtung mittels der Reibhülse 95 der Vorrichtung 99 gegenüber dem Flanschzwischenstück 109 beziehungsweise über dieses gegenüber der ersten rotierenden Masse 21 abgestützt.

Mithin ergibt sich ein Kraftfluss für die Ausrückkraft der Trockenkupplung 2 der Vorrichtung 99 über die zweite rotierende Masse 23, über den Reibring 123, über die dritte rotierende Masse 87, über die Reibhülse 95, über das Flanschzwischenstück 109, über die erste rotierende Masse 21, über den Kurbelwellenflansch 75 schließlich zur Kurbelwelle 41 der Brennkraftmaschine 38. Die Ausrückkraft der Trockenkupplung 2 wird also an der Kurbelwelle 41 der Brennkraftmaschine 38 abgestützt.

Figur 9 zeigt eine schematisierte teilweise Draufsicht auf die Vorrichtung 99 auf den Lochkreis beziehungsweise auf die Verschraubungen des Kurbelwellenflansches 75. Zur Herstellung des Kurbelwellenflansches 75 der Vorrichtung 79, also zur Verschraubung der Vorrichtung 99 mit der Kurbelwelle 41 weist die zweite rotierende Masse 23 beziehungsweise der Flanschteller 55 und das Kupplungsdrehteil 57 Durchbrüche 115 auf. Dies ist vorteilhaft, da aufgrund der Durchbrüche 115 die Vorrichtung 99 als vormontiertes Teil angeliefert werden kann. In einem zweiten Schritt der Endmontage kann dann durch die Durchbrüche 115 die Vorrichtung 99 der zweiten rotierenden Masse 23 hindurch der Kurbelwellenflansch 75 hergestellt werden. Es muss lediglich darauf geachtet werden, dass die Kurbelwelle im Auslieferungszustand denselben Achsversatz aufweist, wie die gelieferte Vorrichtung.

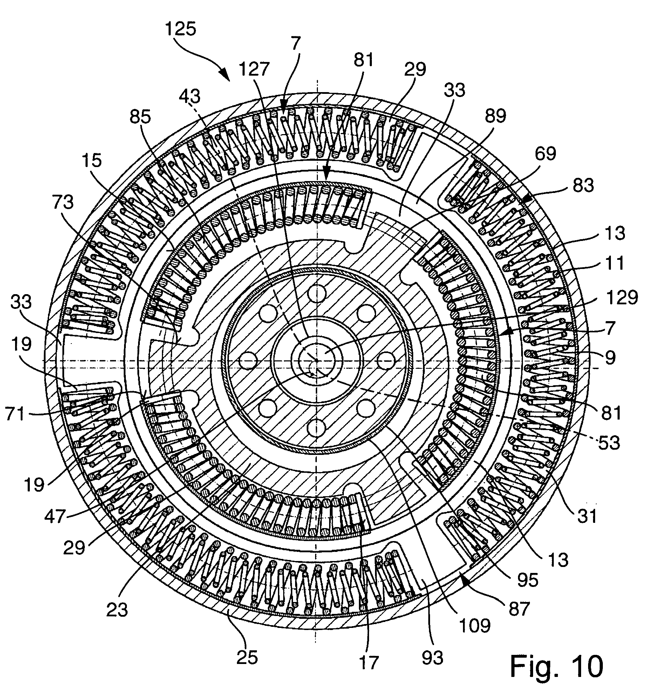

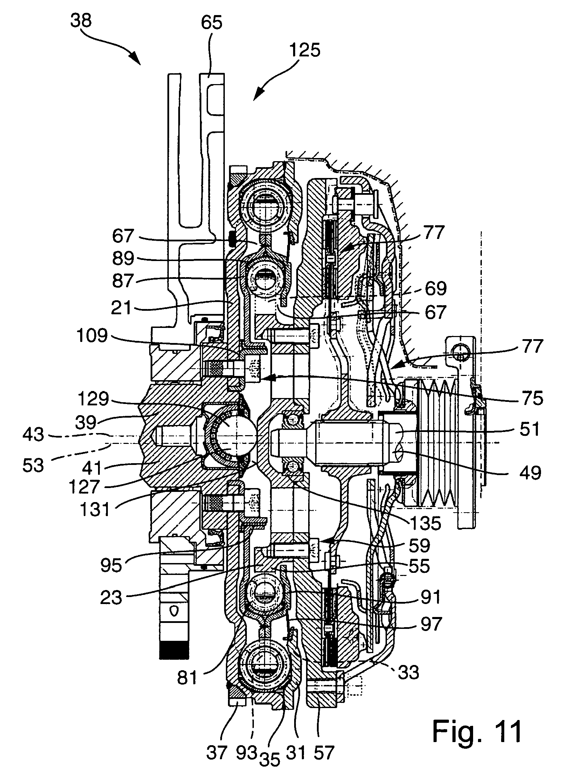

Figur 10 zeigt einen Querschnitt einer weiteren Vorrichtung 125 zur Kopplung der Wellen 39 und 49. Figur 11 zeigt den entsprechenden Längsschnitt der Vorrichtung 125. Im Folgenden wird unter Bezug auf die Figuren 10 und 11 auf die Unterschiede zu den vorhergehend beschriebenen Vorrichtungen 1, 79 und 99 eingegangen.

Im Unterschied zu dem vorhergehenden beschriebenen Kraftfluss für die Ausrückkraft erfolgt dieser über eine der Kurbelwelle 41 zugeordnete Kugelrolle 127, die eine Kugel 129 aufweist, die in Anlagekontakt mit einer Anlauffläche 131 der zweiten rotierenden Masse 23 der Vorrichtung 125 steht. Die Kugel 129 der Kugelrolle 127 ist frei drehbar gelagert und kann daher frei über die Anlauffläche 131 der zweiten rotierenden Masse 23 beziehungsweise des Flanschtellers 55 der Vorrichtung 125 rollen. Mithin wird die Ausrückkraft der Trockenkupplung 2 über die Anlauffläche 131 und die Kugel 129 der Kugelrolle 127 auf die Kurbelwelle 41 der Brennkraftmaschine 38 übertragen. Zur Referenzierung der Abtriebswelle 51 gegenüber der zweiten rotierenden Masse 23 der Vorrichtung 125 ist ein Kugellager 135 vorgesehen, das sich an dem Flanschteller 55 abstützt. Der Lagersitz des Kugellagers 135 wird durch eine entsprechende Modifikation des Flanschtellers 55 und durch einen Vorsprung des kupplungsseitigen Drehteils 57 gebildet. Der Lagersitz kann also durch Verschrauben des Kupplungsflansches 59 hergestellt werden und ist geeignet radiale und axiale Kräfte zu übertragen.

Es ist denkbar, die Kugelrolle 127 anstatt an der Kurbelwelle 41 an der ersten rotierenden Masse 21, die dazu eine entsprechende Aufnahme aufweisen kann, vorzusehen. Entsprechend ergibt sich für die Ausrückkraft ein veränderter Kraftfluss über die erste rotierende Masse 21 auf die Kurbelwelle 41.

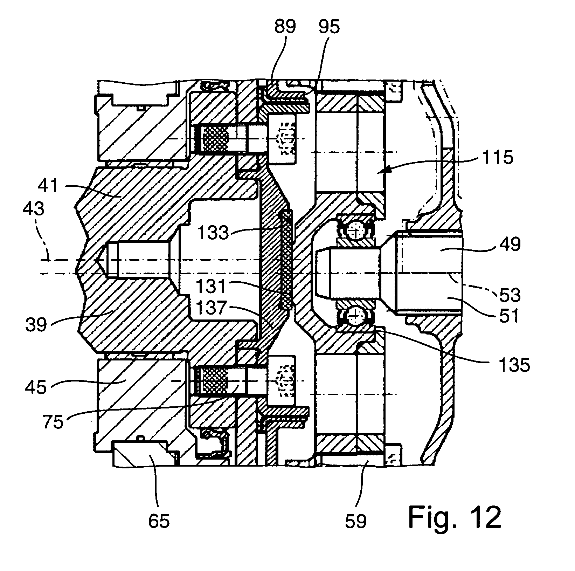

Figur 12 zeigt eine modifizierte Teilansicht des Schnitts gemäß Figur 11. Als einziger Unterschied ist die Kugelrolle 127 durch eine Anlaufscheibe 133 ersetzt. Die Anlaufscheibe 133 der Vorrichtung 125 wirkt dabei auf ähnliche Art und Weise wie die Kugelrolle 127 mit der Anlauffläche 131 zusammen. Mithin wird die Ausrückkraft der Trockenkupplung 2 über die Anlaufscheibe 133 auf die Kurbelwelle 41 der Brennkraftmaschine 38 übertragen. Ferner ist ein Zwischenstück 137 zur Kraftübertragung der Anlaufscheibe 133 auf die Kurbelwelle 41 vorgesehen. Das Zwischenstück 137 ist, ähnlich wie das oben beschriebene Flanschzwischenstück 109, über den Kurbelwellenflansch 75 drehfest mit der Kurbelwelle 41 verbunden.

Vorteilhaft können die Kugelrolle 127 beziehungsweise die Anlaufscheibe 133 der Vorrichtung 125 an die Kurbelwelle 41 der Brennkraftmaschine 38 vormontiert werden. In einem zweiten Montageschritt kann die als Gesamteinheit angelieferte Vorrichtung 125 mit der Brennkraftmaschine 38 verbunden werden.

Denkbar ist es, die Vorrichtung auch ohne die Funktion eines Zweimassenschwungrades, also nur mit der Funktion des Ausgleichs eines Axialen Versatzes zu realisieren. In diesem Fall können die elastischen Kopplungen durch steife Kopplungen ersetzt werden.

Schließlich ist es denkbar, die in den unterschiedlichen Ausführungsbeispielen beschriebenen Merkmale zu neuen Ausführungsbeispielen zu kombinieren, z.B. gegebenenfalls nur einen Bogenfederdämpfer vorzusehen.

### Bezugszeichenliste

- 1.: Vorrichtung
- 2.: Trockenkupplung
- 3.: Torsionsschwingungsdämpfer
- 4.: -
- 5.: Bogenfederdämpfer
- 6.: -
- 7.: Bogenfedereinheit
- 8.: -
- 9.: innere Bogenfeder
- 10.: -
- 11.: äußere Bogenfeder
- 12.: -
- 13.: Lagerschale
- 14.: -
- 15.: Reiblager
- 16.: -
- 17.: Napf
- 18.: -
- 19.: Bogenfederende
- 20.: -
- 21.: erste rotierende Masse
- 22.: -
- 23.: zweite rotierende Masse
- 24.: -
- 25.: 1. Teil (Teller)
- 26.: -
- 27.: 2. Teil (Ring)
- 28.: -
- 29.: Federkanal
- 30.: -
- 31.: Auswölbung
- 32.: -
- 33.: Eindellung
- 34: 34.-
- 35.: Verschweißung
- 36.: -
- 37.: Zahnkranz
- 38.: Brennkraftmaschine
- 39.: 1. Welle
- 40.: -
- 41.: Kurbelwelle
- 42.: -
- 43.: Drehachse
- 44.: -
- 45.: Lagerstück
- 46.: -
- 47.: Radius
- 48.: -
- 49.: 2. Welle
- 50.: -
- 51.: Abtriebswelle
- 52.: .-
- 53.: Drehachse
- 54.: -
- 55.: Flanschteller
- 56.: -
- 57.: Drehteil (Kupplung)
- 58.: -
- 59.: Kupplungsflansch
- 60.: -
- 61.: Zwischengehäuse
- 62.: -
- 63.: Kugellager
- 64.: -
- 65.: Motorblock
- 66.: -
- 67.: Innenraum
- 68.: -
- 69.: Flanschflügel
- 70.: -
- 71.: 1. Anschlagfläche
- 72.: -
- 73.: 2. Anschlagfläche
- 74.: -
- 75.: Kurbelwellenflansch
- 76.: -
- 77.: Kupplungselement
- 78.: -
- 79.: Vorrichtung
- 80.: -
- 81.: innerer Bogenfederdämpfer
- 82.: -
- 83.: äußerer Bogenfederdämpfer
- 84.: -
- 85.: innere Bogenfeder
- 86.: -
- 87.: 3. rotierende Masse
- 88.: -
- 89.1: 1. Drehteil (Teller)
- 90.: -
- 91.: 2. Drehteil (Ring)
- 92.: -
- 93.: Flanschflügel
- 94.: -
- 95.: Reiblagerhülse
- 96.: -
- 97.: Tellerfeder
- 98.: -
- 99.: Vorrichtung
- 100.: -
- 101.: Exzenter
- 102.: -
- 103.: Primärkugellager
- 104.: -
- 105.: Sekundärkugellager
- 106.: -
- 107.: Nadellager
- 108.: Anschlag
- 109.: Flanschzwischenstück
- 110.:
- 111.: Bohrung, exzentrisch
- 112.: -
- 113.: zweiteiliges Nadellager
- 114.: Reihe
- 115.: Durchbruch
- 116.: -
- 117.: Nadellager
- 118.: -
- 119.: Exzenter
- 120.: -
- 121.: Nadellager
- 122.: -
- 123.: Reibring
- 124.: -
- 125.: Vorrichtung
- 126.: -
- 127.: Kugelrolle
- 128.: -
- 129.: Kugel
- 130.: -
- 131.: Anlauffläche
- 132.: -
- 133.: Anlaufscheibe
- 134.: -
- 135.: Kugellager
- 136.: -
- 137.: Zwischenstück

## Patentansprüche

1. Vorrichtung zur Kopplung einer ersten Welle (39) und einer zweiten Welle (49), wobei die Wellen (39,49) mit axialem Versatz achsparallel zueinander angeordnet sind, wobei mindestens eine der ersten Welle (39) zugeordnete erste rotierende Masse (21) und mindestens eine der zweiten Welle (49) zugeordnete zweite rotierende Masse (23) vorgesehen sind, wobei zur Übertragung eines Drehmoments zumindest eine mit der ersten Welle (39) gekoppelte erste Anschlagfläche (71) und eine mit der zweiten Welle gekoppelte zweite Anschlagfläche (73) vorgesehen sind, die sich bei der Übertragung eines Drehmoments berühren, **dadurch gekennzeichnet, dass** die erste Anschlagfläche (71) radial ortsfest zur ersten Welle (39) und die zweite Anschlagfläche (73) radial ortsfest zur zweiten Welle (49) angeordnet ist.

2. Vorrichtung nach Anspruch 1, **gekennzeichnet durch** einen Torsionsschwingungsdämpfer (3).

3. Vorrichtung nach dem vorhergehenden Anspruch, **dadurch gekennzeichnet, dass** der Torsionsschwingungsdämpfer (3) ein Bogenfederdämpfer (5) ist.

4. Vorrichtung nach einem der vorhergehenden Ansprüche, **dadurch gekennzeichnet, dass** die erste Welle (39) eine relativ zu einem Motorblock (65) einer Brennkraftmaschine (38) verstellbare Kurbelwelle (41) ist, und dass die zweite Welle (49) eine Abtriebswelle (51), insbesondere eine Abtriebswelle (51) einer Trockenkupplung (2), ist.

5. Vorrichtung nach einem der vorhergehenden Ansprüche, **dadurch gekennzeichnet, dass** diese als Zweimassenschwungrad realisiert ist.

6. Vorrichtung nach einem der vorhergehenden Ansprüche, **dadurch gekennzeichnet, dass** zumindest eine Bogenfeder (11) des Bogenfederdämpfers (5) ein Bogenfederende (19) und die erste Anschlagfläche (71) aufweist, und dass ein mit der zweiten Welle (49) und der zweiten rotierenden Masse (23) gekoppelter Flanschteller (55), insbesondere mindestens ein Flanschflügel (69) des Flanschtellers (55), die zweite Anschlagfläche (73) aufweist.

7. Vorrichtung nach dem vorhergehenden Anspruch, **dadurch gekennzeichnet, dass** das Bogenfederende (19) der Bogenfeder (11) die erste Anschlagfläche (71) aufweist.

8. Vorrichtung nach dem vorhergehenden Anspruch, **dadurch gekennzeichnet, dass** das Bogenfederende (19) einen Napf (17) mit der ersten Anschlagfläche (71) aufweist.

9. Vorrichtung nach einem der vorhergehenden Ansprüche, **dadurch gekennzeichnet, dass** ein innerer Bogenfederdämpfer (81) und ein äußerer Bogenfederdämpfer (83) vorgesehen sind.

10. Vorrichtung nach dem vorhergehenden Anspruch, **dadurch gekennzeichnet, dass** der innerer Bogenfederdämpfer (81) die erste Anschlagfläche (71) und eine dritte rotierende Masse (87) aufweist.

11. Vorrichtung nach dem vorhergehenden Anspruch, **dadurch gekennzeichnet, dass** die dritte rotierende Masse (87) koaxial zur ersten rotierenden Masse (21) und zur Drehachse (43) der ersten Welle (39) gelagert ist.

12. Vorrichtung nach Anspruch 6, **dadurch gekennzeichnet, dass** der Flanschteller (55) koaxial zu einer Schwenkachse der Kurbelwelle (41) und ortsfest zu dem Motorblock (65) der Brennkraftmaschine (38) gelagert ist.

13. Vorrichtung nach dem vorhergehenden Anspruch, **dadurch gekennzeichnet, dass** die Lagerung des Flanschtellers (55) über ein dem Motorblock (65) zugeordnetes Zwischengehäuse (61) und ein dem Zwischengehäuse (61) und dem Flanschteller (55) zugeordnetes Kugellager (63) erfolgt, oder
dass die Lagerung über einen Exzenter (101) mit zwei exzentrischen Kugellagern (103,105), insbesondere einem dem Flanschteller (55) zugeordneten und koaxial zur zweiten Welle (49) angeordneten Sekundärkugellager (105), und einem der Kurbelwelle (41), insbesondere über die erste rotierende Masse (21), zugeordneten und koaxial zur Kurbelwelle (41) angeordneten Sekundärkugellager (105) erfolgt, oder
dass die Lagerung über einen Exzenter (101) mit zwei exzentrischen Kugellagern (103,105), insbesondere einem dem Flanschteller (55) zugeordneten und koaxial zur zweiten Welle (49) angeordneten Sekundärkugellager (105), und einem der Kurbelwelle (41), insbesondere über die erste rotierende Masse (21), zugeordneten und koaxial zur Kurbelwelle (41) angeordneten Sekundärkugellager (105) erfolgt, wobei der Exzenter (101) ein der zweiten Welle (49) zugeordnetes Nadellager (107), insbesondere ein zweireihiges Nadellager (113), aufweist, oder
dass die Lagerung über einen Reibring (123) zur Aufnahme axialer Lagerkräfte, insbesondere einem der dritten rotierenden Masse (87) zugeordneten Reibring (123), sowie zur Aufnahme von radialen Kräften über ein dem Flanschteller (55) und der zweiten Welle (49) zugeordneten ersten Nadellager (117) erfolgt, wobei die zweite Welle (49) zur Aufnahme von radialen Kräften zusätzlich einem Exzenter (119) mit einem zur Kurbelwelle (41) koaxial und der Kurbelwelle (41), insbesondere über die erste rotierende Masse (21), zugeordneten Primärkugellager (103) zugeordnet ist, oder
dass die Lagerung zur Aufnahme axialer Kräfte über eine der Kurbelwelle (41) und einer Anlauffläche (131) des Flanschtellers (55) zugeordneten Kugelrolle (127) oder Anlaufscheibe (133) sowie zur Aufnahme radialer Kräfte über ein dem Flanschteller (55) und der zweiten Welle (49) zugeordneten Kugellager (135) erfolgt.

14. Vorrichtung nach dem vorhergehenden Anspruch, **dadurch gekennzeichnet, dass** die Kugelrolle (127) vor der ersten Montage der Vorrichtung (1;79;99;125) beziehungsweise des Zweimassenschwungrads in die Kurbelwelle (41) einpressbar ist.

15. Vorrichtung nach dem vorhergehenden Anspruch, **dadurch gekennzeichnet, dass** die Vorrichtung (1;79;99;125) beziehungsweise das Zweimassenschwungrad nach dem Einpressen der Kugelrolle (127) als komplett vormontierte Einheit montierbar ist.
